# EUROPÄISCHE PATENTSCHRIFT

(11) **EP 2 539 607 B1**
(45) Veröffentlichungstag und Bekanntmachung des Hinweises auf die Patenterteilung: **26.08.2015**
(21) Anmeldenummer: 11706155.6
(22) Anmeldetag: 11.02.2011
(51) Int. Cl.: F16H 25/20

(54) **VORRICHTUNG ZUR UMSETZUNG EINER DREHBEWEGUNG IN EINE AXIALBEWEGUNG**
APPARATUS FOR CONVERTING A ROTATIONAL MOVEMENT INTO AN AXIAL MOVEMENT
DISPOSITIF POUR TRANSFORMER UN MOUVEMENT DE ROTATION EN MOUVEMENT AXIAL

(30) Priorität: 17.07.2010 DE 102010034843; 22.02.2010 DE 102010008861
(43) Veröffentlichungstag der Anmeldung: 02.01.2013
(73) Patentinhaber: AUMA Riester GmbH & Co. KG, 79379 Müllheim (DE)
(72) Erfinder: WASSER, Tobias, 79102 Freiburg (DE)
(74) Vertreter: Andres, Angelika Maria
(86) Internationale Anmeldenummer: PCT/EP2011/000642
(87) Internationale Veröffentlichungsnummer: WO 2011/101107

(56) Entgegenhaltungen:
- WO-A1-2006/063874
- DE-A1- 4 019 482
- DE-A1-102008 014 995
- US-A- 2 321 442
- US-A- 3 029 660
- US-A- 4 858 481

## Beschreibung

Die Erfindung betrifft eine Vorrichtung zur Umsetzung einer Drehbewegung in eine Axialbewegung wobei einer Gewindestange vorgesehen ist, auf der eine axial zur Gewindestange bewegbare Mutter angeordnet ist, wobei zumindest eine Arretierkomponente vorgesehen ist, die so angeordnet ist, dass sie eine Drehbewegung der Mutter während der Axialbewegung längs der Gewindestange verhindert, wobei zumindest ein Endanschlag vorgesehen ist, der die Axialbewegung der Mutter entlang der Gewindestange begrenzt. Eine derartige Vorrichtung ist allgemein bekannt.

Bevorzugt findet die o.g. Vorrichtung Anwendung bei einem elektrischen Stellantrieb zur Steuerung und/oder Regelung einer Armatur. Bei der Armatur handelt es sich beispielsweise um ein Ventil, einen Schieber, eine Drossel oder eine Klappe. In Abhängigkeit von der jeweils zu betätigenden Armatur entspricht der von dem Stellantrieb durchgeführte Verstellvorgang einer Dreh-, Schiebe- oder Schwenkbewegung. Jedoch ist die Erfindung keineswegs auf die Ausgestaltung eines Stellantriebs beschränkt. Vielmehr ist sie immer dann einsetzbar, wenn eine Wandermutter gegen einen Anschlag fährt und leicht wieder gelöst werden soll.

Bei Stellantrieben erfolgt die Drehmomentübertragung zwischen einem Elektromotor bzw. einem Betätigungselement und der Armatur über ein Untersetzungsgetriebe, das je nach Anwendungsfall ein Kegelrad- oder Stirnradgetriebe, ein Schneckengetriebe, ein Überlagerungsgetriebe oder ein Hebelgetriebe sein kann. Das Untersetzungsgetriebe ist notwendig, um die hohe Drehzahl des Elektromotors in die gewünschte in hohem Maße konstante Abtriebsdrehzahl zur Betätigung der Armatur umzusetzen. Von der Anmelderin werden Stellantriebe angeboten und vertrieben, die auf unterschiedlichste Anforderungen abgestimmt sind. So reicht der Drehmomentbereich bei Drehantrieben bis zu einem Drehmoment von 32.000 Nm; bei Schwenkantrieben lassen sich Drehmomente bis zu 360.000 Nm realisieren.

Zur Untersetzung der Drehzahl des Elektromotors in die Abtriebsdrehzahl, mit der die Armatur betätigt wird, wird beispielsweise in Verbindung mit einem Planetengetriebe ein Schneckengetriebe mit Schneckenwelle, Schnecke und kämmendem Schneckenrad eingesetzt. Um sicherzustellen, dass das Schneckengetriebe bei Stillstand des Elektromotors in der gewünschten Ruheposition verbleibt, weist das Schneckengetriebe eine Selbsthemmung auf. Schneckenwelle und Abtriebshohlwelle mit Schneckenrad laufen üblicherweise in Kugel- bzw. Trockengleitlagern.

Die Schnecke ist verschiebbar zwischen zwei Messfederpaketen auf der Schneckenwelle angeordnet, so dass die Schnecke bei einem zu übertragenden Drehmoment eine translatorische Bewegung relativ zu der Schneckenwelle erfährt. Diese Verschiebung, die ein Maß für das zu übertragende Drehmoment ist, wird an eine Steuereinheit weitergeleitet. Der Getrieberaum ist mit Schmierstoff gefüllt, so dass ein wartungsfreier Betrieb über einen längeren Zeitraum sichergestellt ist.

Je nach Konstruktionsart der Armatur muss der Drehantrieb in den Endlagen weg- oder drehmomentabhängig abgeschaltet werden. Hierfür sind in der Steuereinheit üblicherweise zwei unabhängige Messsysteme, nämlich eine Wegschaltung und eine Drehmomentschaltung vorgesehen, die den durchfahrenen Stellweg bzw. das an der Abtriebswelle anliegende Drehmoment messen. Das Erreichen einer gewünschten Position wird über einen Schalter an die Steuerung signalisiert, die in Folge den Elektromotor ausschaltet.

Um im Fehlerfall und somit beim Überfahren einer der Endpositionen einen Getriebeschaden oder Schaden an der Armatur vorzubeugen, sind zwei Endanschläge vorgesehen, die die Wanderstrecke der Mutter begrenzen. Allerdings erfolgt das Anfahren der Mutter gegen einen der Endanschläge mit einem hohen Drehmoment, so dass das Lösemoment entsprechend hoch wird. Erschwerend kommt hinzu, dass das Schmierfett bei Kontakt zwischen Endanschlag und Mutter wegkriecht, wodurch das Lösemoment gegenüber dem Anzugsmoment weiterhin erhöht wird. Dies führt zu erheblichen Problemen bei der Wieder-Inbetriebnahme eines festsitzenden Stellantriebs nach dem Auftreten eines Fehlerfalls. Zwecks Reduktion des Lösemoments wird bei bekannten Lösungen der Anmelderin die Anlagefläche der Mutter deshalb ballig bzw. konvex ausgebildet.

Der Erfindung liegt die Aufgabe zugrunde, im Falle eines Kontakts zwischen der Mutter und dem Endanschlag das Lösemoment gegenüber dem Anzugsmoment erheblich zu verringern.

Die Aufgabe wird dadurch gelöst, dass ein Keilscheibenpaar zwischen der axial bewegbaren Mutter und dem Endanschlag angeordnet ist, wobei das Keilscheibenpaar so ausgestaltet ist, dass die Keilscheiben durch Pressen der Mutter gegen den Endanschlag in Eingriff gebracht werden und ein Vorspannmoment erzeugen und wobei das Drehmoment zum Lösen der Mutter von dem Endanschlag im Wesentlichen um das Vorspannmoment des Keilscheibenpaars kleiner ist als das Drehmoment zum Anpressen der Mutter gegen den Endanschlag.

Wie bereits in der Beschreibungseinleitung dargelegt, handelt es sich bei der erfindungsgemäßen Vorrichtung bevorzugt um einen Stellantrieb zur Betätigung einer Armatur, wobei zwischen einem Betätigungselement und der Armatur ein insbesondere als Schneckengetriebe ausgestaltetes Untersetzungsgetriebe vorgesehen ist, wobei die die Gewindestange bildende Antriebswelle des Schneckengetriebes ein Außengewinde mit einer definierten Gewindesteigung aufweist, wobei auf der Antriebswelle die axial bewegbare Mutter und zwei die maximale Wanderstrecke der Mutter begrenzende Endanschläge angeordnet sind, und wobei zwischen der Mutter und jedem der beiden Endanschläge jeweils ein Keilscheibenpaar angeordnet ist.

Bei der Armatur handelt es sich um ein Stellglied, insbesondere um ein Ventil oder einen Schieber jeweils mit Spindel und Gewindebuchse, um eine Drossel, eine Klappe, einen Kugelhahn oder einen Damper.

Wie bereits zuvor erläutert, handelt es sich bei dem Betätigungselement um einen Elektromotor oder um ein separat betätigbares Stellrad, insbesondere um ein separat betätigbares Handrad. Das separat betätigbare Stellrad stellt sicher, dass der Stellantrieb auch im Notfall, z.B. bei einem Stromausfall oder beim Festfahren der Mutter gegen den Endanschlag, noch betrieben werden kann. Das Stellrad ist erforderlich, um einen in der Prozessautomatisierung vorgegebenen Sicherheitsstandard zu erfüllen. Bei dem Stellrad handelt es sich üblicherweise um ein Handrad, das manuell vom Bedienpersonal betätigt wird, wodurch die Armatur in eine gewünschte Position gebracht werden kann.

Eine vorteilhafte Weiterbildung der erfindungsgemäßen Vorrichtung sieht vor, dass die beiden Keilscheiben des Keilscheibenpaars bzw. der Keilscheibenpaare auf den einander zugewandten Innenflächen Keilflächen aufweisen, wobei der Steigungswinkel der Keilflächen und der Steigungswinkel des Außengewindes der Gewindestange bzw. der Antriebswelle zueinander entgegengesetzt orientiert sind.

Insbesondere wird vorgeschlagen, dass der Steigungswinkel der Keilflächen größer ist als der Steigungswinkel des Außengewindes der Gewindestange bzw. der Antriebswelle.

Bevorzugt sind auf den voneinander abgewandten Außenflächen der Keilscheiben Radialrippen vorgesehen. Weiterhin wird in Verbindung mit der erfindungsgemäßen Vorrichtung vorgeschlagen, dass die Keilscheiben eines jeden Keilscheibenpaars in Abhängigkeit von dem Material der Kontaktflächen des Endanschlags und der Mutter aus einem Material gefertigt sind, welches sicherstellt, dass sich die Radialrippen an den Außenflächen der Keilscheiben im Falle eines Kontakts formschlüssig in die entsprechenden Kontaktflächen der Mutter bzw. des Endanschlags einprägen. Ein Gleiten bzw. Verrutschen auf der Kontaktfläche der Mutter bzw. des Endanschlags ist nachfolgend nicht mehr möglich.

Zwar sind Keilsicherungsscheiben als solche bereits bekannt geworden. Diese werden jedoch zur Sicherung von Schraubverbindungen verwendet und haben somit eine in Bezug auf die erfindungsgemäße Lösung konträre Wirkung. Hersteller der bekannten Keilsicherungsscheiben ist die Firma Nord-Lock. Die bekannten Keilsicherungsscheiben haben auf der Innenseite Keilflächen und auf der Außenseite Radialrippen. Die Form der Keilflächen ist so gewählt, dass der Winkel der Keilflächen stets größer ist als die Gewindesteigung. Hierbei haben der Steigungswinkel der Keilflächen und die Gewindesteigung die gleiche Orientierung. Die Scheiben sind paarweise verklebt und so eingesetzt, dass die innen liegenden Keilflächen aufeinander liegen. Wird die Schraube bzw. die Mutter angezogen, so prägen sich die Radialrippen der Keilsicherungsscheiben formschlüssig in die Gegenauflage ein. Das Scheibenpaar sitzt fest an seinem Platz, und Bewegungen sind nur noch zwischen den Keilflächen möglich. Schon bei der geringsten Drehbewegung in Löserichtung entsteht durch das Übereinandergleiten der innen liegenden Keilflächen ein sog. Klickeffekt; die Keilflächen verkeilen sich ineinander. Aufgrund der Keilwirkung kommt es zu einer Erhöhung der Vorspannkraft, wodurch sich die Schraube bzw. die Mutter selbst sichert. Somit ist die Schraubverbindung auch unter extremen Vibrationen und dynamischen Belastungen gesichert.

Wie bereits gesagt, liefert die erfindungsgemäße Lösung einen entgegengesetzten Effekt: Hier sind die Keilflächen so ausgestaltet, dass beim Lösen der Mutter von dem entsprechenden Endanschlag die Keilflächen an den Innenflächen der Keilscheiben gegeneinander verschiebbar sind, wobei das anzuwendende Drehmoment beim Ablösen von Wandermutter und Endanschlag gegenüber dem Drehmoment beim Anpressen im Wesentlichen um die beim Drehen resultierende Vorspannkraft des Keilscheibenpaars vermindert ist. Die Belastung des Antriebs durch hohe Lösemomente wird hierdurch effektiv vermindert.

Als vorteilhaft wird es in Verbindung mit der erfindungsgemäßen Vorrichtung angesehen, wenn im Falle des Stellantriebs eine Keilscheibe von einem der beiden Keilscheibenpaare an ihrer Außenfläche fest mit der entsprechenden Kontaktfläche des Endanschlags oder der Mutter verbunden ist.

Eine vorteilhafte Ausgestaltung der erfindungsgemäßen Vorrichtung sieht vor, dass der Endanschlag bzw. die Endanschläge entweder fest an der Gewindestange bzw. der Antriebswelle fixiert sind, oder dass zumindest ein Verstellmechanismus vorgesehen ist, der eine variable Positionierung des Endanschlags bzw. der Endanschläge ermöglicht. Über die variable Positionierung ist es möglich, die Verstellwege der Armatur optimal an die jeweiligen Gegebenheiten anzupassen.

Die Erfindung wird anhand der nachfolgenden Figuren näher beschrieben. Es zeigt:
Fig. 1: eine schematische Darstellung eines Stellglieds bzw. Aktors,
Fig. 2: einen Längsschnitt durch einen Stellantrieb zur Betätigung einer Armatur,
Fig. 2a: einen Längsschnitt in dem Bereich des Stellantriebs, in dem die beiden fest eingestellten Endanschläge vorgesehen ist.
Fig. 2b: den Ausschnitt B aus der Fig. 1, wobei einer der Endanschläge verstellbar ausgestaltet ist, und
Fig. 3: eine Seitenansicht eines erfindungsgemäßen Keilscheibenpaares.

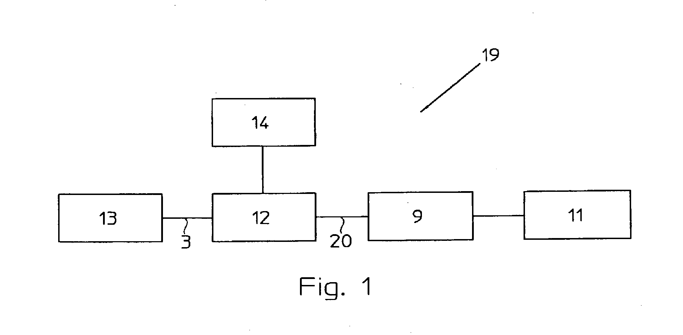

Fig. 1 zeigt eine schematische Darstellung eines Stellgliedes 19 bzw. eines Aktors 19. Das Stellglied 19 zur Betätigung der Armatur 11 setzt sich üblicherweise zusammen aus einem Elektromotor 13, einem Stellantrieb 12 mit einer nicht gesondert dargestellten elektrischen Steuereinheit, einem Untersetzungsgetriebe 9 und einer Armatur 11. Bei der Armatur 11 handelt es sich beispielsweise um ein Ventil, einen Schieber, eine Drossel oder eine Klappe. Die elektrische Steuereinheit kann in den Stellantrieb 12 integriert sein, sie kann an den Stellantrieb 12 angebaut oder als separate Komponente ausgestaltet sein.

Die in der Prozess- und Verfahrenstechnik verwendeten Stellantriebe 12 für Armaturen 11 sind dahingehend ausgelegt, dass sie bei niedrigen Drehzahlen (4 - 180 U/min) hohe Drehmomente (30 - 500.000 Nm) übertragen können, wobei das übertragene Drehmoment auch bei geringen Drehwinkeln eine hohe Konstanz aufweisen muss.

Die Drehmomentübertragung zwischen dem Elektromotor 13 und der Armatur 11 erfolgt über ein Untersetzungsgetriebe 9. Das Untersetzungsgetriebe 9 ist notwendig, um die hohe Drehzahl des Elektromotors 13 in die gewünschte in hohem Maße konstante Abtriebsdrehzahl zur Betätigung der Armatur 11 umzusetzen. Als Untersetzungsgetriebe 9 können unterschiedliche Getriebe eingesetzt werden. Beispielhaft seien ein Kegelrad- oder Stirnradgetriebe, ein Schneckengetriebe, ein Überlagerungsgetriebe oder ein Hebelgetriebe genannt. Der Drehmomentbereich bei Drehantrieben reicht bis zu einem Drehmoment von 32.000 Nm; bei Schwenkantrieben lassen sich Drehmomente bis zu 360.000 Nm realisieren.

Um einen in der Prozess- oder Verfahrensautomatisierung vorgegebenen Sicherheitsstandard zu erfüllen, muss der Stellantrieb im Notfall über ein separat betätigbares Stellrad 14 betrieben werden können. Dieses Stellrad 14 kommt darüber hinaus auch bei der Inbetriebnahme bzw. bei der Wieder-Inbetriebnahme des Stellantriebs 12 nach einem Fehlerfall zum Einsatz. Bei dem Stellrad 14 handelt es sich üblicherweise um ein Handrad, das manuell vom Bedienpersonal betätigt wird, wodurch die Armatur 11 in eine gewünschte Position gebracht werden kann.

Zwecks Trennung von Handbetrieb und Motorbetrieb ist ein in der Fig. 1 nicht gesondert dargestellter Kupplungsmechanismus vorgesehen. Der Kupplungsmechanismus ist üblicherweise so ausgestaltet und/oder angeordnet, dass im Motorbetrieb der Elektromotor 13 mit der Abtriebswelle 20 direkt gekuppelt und das Stellrad 14 ausgekuppelt ist, während im Handbetrieb die Abtriebswelle 20 mit dem Stellrad 14 gekuppelt und der Elektromotor 13 ausgekuppelt ist. Hierdurch ist eine Trennung zwischen Motorbetrieb und Handbetrieb möglich. Insbesondere ist der Kupplungsmechanismus derart ausgestaltet, dass das Stellrad 14 automatisch von der Antriebswelle 3 ausgekuppelt wird, sobald der Stellantrieb 12 im Motorbetrieb arbeitet - der Motorbetrieb hat also Vorrang vor dem Handbetrieb. Entsprechende Stellantriebe werden von der Anmelderin angeboten und vertrieben.

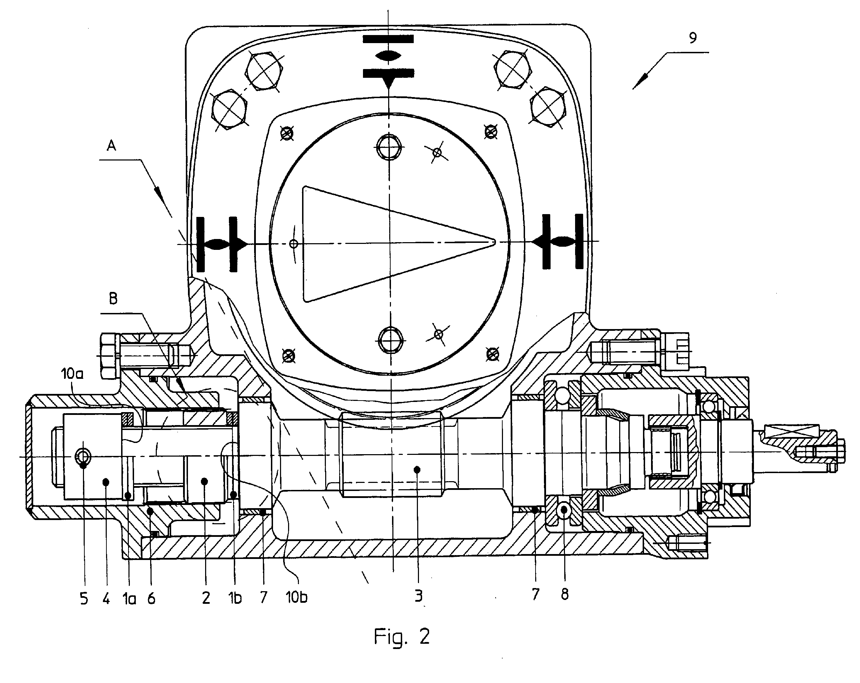

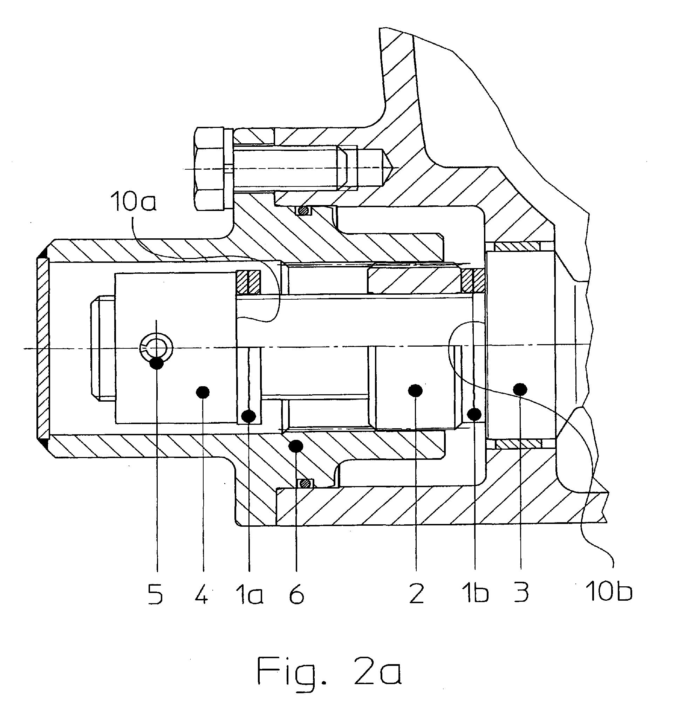

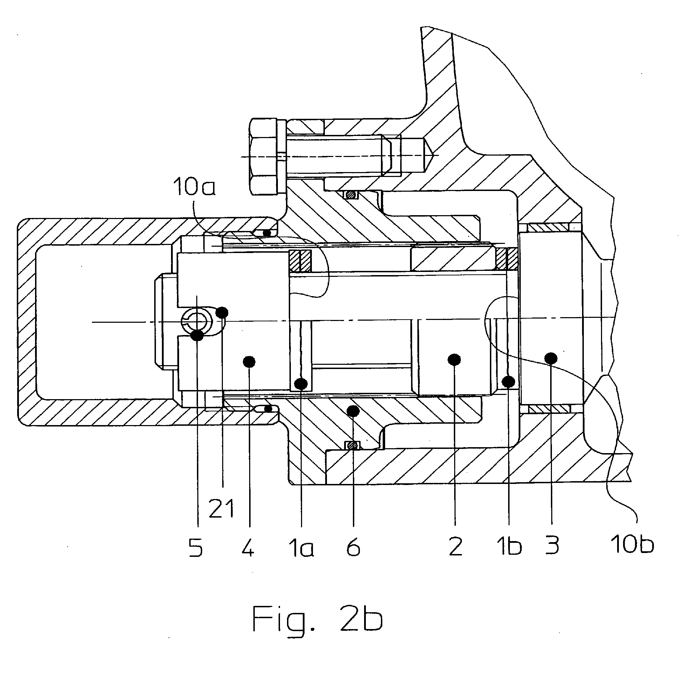

Fig. 2 zeigt einen Längsschnitt durch eine Ausgestaltung der erfindungsgemäßen Lösung, bei der zur Untersetzung der Drehzahl ein Schneckengetriebe 9 eingesetzt wird. Die Antriebs- bzw. Schneckenwelle 3 ist über zwei radiale Lagerungen 7 und das axiale Lager 8 in dem Gehäuse 6 gelagert. Der Getrieberaum ist mit Schmierstoff gefüllt, so dass ein wartungsfreier Betrieb des Stellantriebs 12 über einen längeren Zeitraum sichergestellt ist.

Je nach Konstruktionsart der Armatur 11 wird der Drehantrieb in den Endlagen weg- oder drehmomentabhängig abgeschaltet. Hierfür sind in der Steuereinheit üblicherweise zwei unabhängige Messsysteme, nämlich eine Wegschaltung und eine Drehmomentschaltung vorgesehen, die den durchfahrenen Stellweg bzw. das an der Abtriebswelle anliegende Drehmoment messen. Das Erreichen einer gewünschten Position wird über einen Schalter an die Steuerung signalisiert, die in Folge den Elektromotor 13 ausschaltet.

Um im Fehlerfall eine unbegrenzte translatorische Bewegung zu verhindern, sind zwei Endanschläge 10a, 10b vorgesehen. Zwei unterschiedliche Varianten von Endanschlägen sind in den Figuren Fig. 2a, Fig. 2b dargestellt. Auf der Schneckenwelle 3 ist eine axial zur Schneckenwelle 3 bewegbare Mutter 2 angeordnet. Mittels einer in der Fig. 2 nicht gesondert dargestellten Arretierkomponente wird eine Drehbewegung der Wandermutter/Mutter 2 während der Axialbewegung längs der Schneckenwelle 3 verhindert. An der Schneckenwelle 3 sind in zwei Endbereichen Endanschläge 10a, 10b vorgesehen, die die Axialbewegung der Mutter 2 entlang der Schneckenwelle 3 begrenzen. Bei dem Endanschlag 10a handelt es sich um eine Endmutter 4, die bei der in Fig. 2a gezeigten Ausgestaltung in einer festen Position an der Antriebswelle 3 fixiert ist. Bei der in Fig. 2b gezeigten Ausgestaltung ist die Mutter 2 innerhalb einer durch die Längsabmessung des Langlochs 21 vorgegebenen Strecke frei verstellbar. Durch den verstellbaren Endanschlag 4 ist eine optimale Anpassung des Verstellweges an den jeweils durchzuführenden Verstellvorgang möglich. Bei beiden Ausgestaltungen erfolgt die Sicherung der Endmutter 4 bevorzugt über einen Spannstift 5. Der Endanschlag 10b ist durch die spezielle Ausgestaltung der Schneckwelle 3 definiert.

Wie bereits an vorhergehender Stelle erläutert, fährt die Mutter 2 im Fehlerfall - also bei Versagen der Verstellweg-Steuerung - gegen einen der Endanschläge 10a; 10b. Da das Anfahren mit einem hohen Drehmoment erfolgt, ist es nachfolgend extrem schwierig, die fest sitzende Mutter 2 wieder von dem entsprechenden Endanschlag 10a, 10b zu lösen.

Erfindungsgemäß ist daher zwischen der axial bewegbaren Mutter 2 und den Endanschlägen 10a, 10b jeweils ein Keilscheibenpaar 1 angeordnet. Jedes Keilscheibenpaar 1 a, 1 b besteht aus zwei Keilscheiben 1.1, 1.2, die so ausgestaltet sind, dass die Keilscheiben 1.1, 1.2 durch Pressen der Mutter 2 gegen den Endanschlag 10a, 10b in Eingriff gebracht werden. Die Keilscheiben 1.1, 1.2 erzeugen hierbei ein Drehmoment zum Lösen der Mutter 2 von dem entsprechenden Endanschlag 10a, 10b, das im Wesentlichen um das Vorspannmoment des entsprechenden Keilscheibenpaars 1 a, 1 b kleiner ist als das Drehmoment zum Anpressen der Mutter 2 gegen den Endanschlag 10a, 10b. Somit ist das Lösemoment um einiges geringer als das Anzugsmoment, und ein Lösen der fest sitzenden Mutter 2 bzw. eine Wieder-Inbetriebnahme des festgefahrenen Stellantriebs 12 ist wesentlich erleichtert.

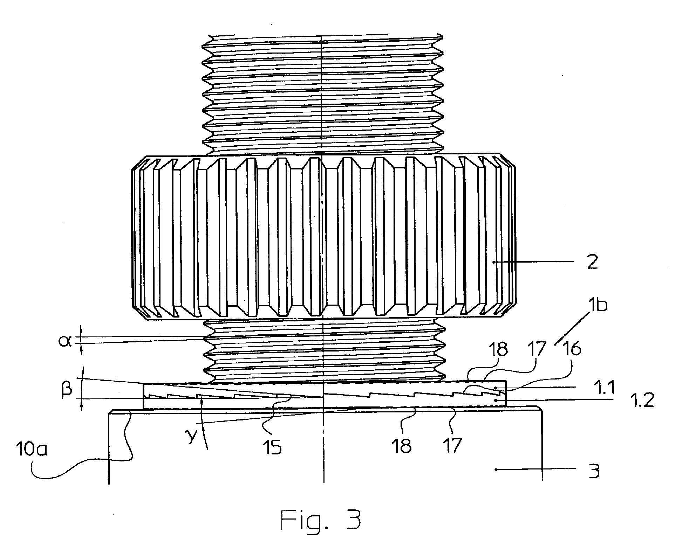

Fig. 3 zeigt eine vergrößerte Darstellung eines erfindungsgemäßen Keilscheibenpaares 1 b in Seitenansicht. Die Antriebswelle / Schneckenwelle 3, weist ein Außengewinde mit einer definierten Gewindesteigung α auf. Auf der Antriebswelle 3 ist die Anschlagmutter / Mutter 2 axial verschiebbar angeordnet. Zwischen der Anschlagmutter 2 und einem auf der Antriebswelle 3 ausgestalteten Endanschlag 10b ist ein Keilscheibenpaar 1 b mit Keilscheiben 1.1, 1.2 vorgesehen. Auf den einander zugewandten Innenflächen 15 der Keilscheiben 1.1, 1.2 sind Keilflächen 16 angeordnet, deren Steigungswinkel β entgegengesetzt orientiert ist zu dem Steigungswinkels α des Außen-gewindes der Antriebswelle 3. Hierdurch wird erreicht, dass im Falle des Festfahrens der Mutter 2 gegen den Endanschlag 10b das Lösemoment um das Vorspannmoment der beiden Keilscheiben 1.1, 1.2 verringert wird. Bevorzugt ist der Steigungswinkel β der Keilflächen 16 größer als der Steigungswinkel α des Außengewindes der Antriebswelle 3. Hierdurch lässt sich ein höheres Vorspannmoment der Keilscheiben 1.1, 1.2 erreichen.

Auf den voneinander abgewandten Außenflächen 17 der Keilscheiben 1.1, 1.2 sind Radialrippen 18 vorgesehen. Die Keilscheiben 1.1, 1.2 eines jeden Keilscheibenpaars 1 a, 1 b sind in Abhängigkeit von dem Material der Kontaktflächen des jeweiligen Endanschlags 10a, 10b und der Mutter 2 aus einem Material gefertigt, welches sicherstellt, dass sich die Radialrippen 18 an den Außenflächen 17 der Keilscheiben 1.1, 1.2 im Falle eines Kontakts formschlüssig in die entsprechenden Kontaktflächen der Mutter 2 bzw. des Endanschlags 10b, 10b einpressen können. Da die Keilscheiben 1.1, 1.2 mit ihren Außenflächen fest an dem Endanschlag 10b oder der Mutter 2 fixiert sind, sind die Keilflächen 16 an den Innenflächen 15 der Keilscheiben 1.1, 1.2 beim Lösen der Mutter 2 von dem entsprechenden Endanschlag 10b gegeneinander verschiebbar. Hierdurch ist das Drehmoment beim Anpressen gegenüber dem Drehmoment beim Ablösen von Wandermutter 2 und Endanschlag 10b im Wesentlichen um die beim Drehen resultierende Vorspannkraft des Keilscheibenpaars 1 b erhöht. Alternativ ist es möglich, eine der beiden Keilscheiben unlösbar mit der Mutter 2 oder dem Endanschlag 10b zu verbinden.

### Bezugszeichenliste

- 1:
- 1a: Keilscheibenpaar
- 1b: Keilscheibenpaar
- 1.1: Keilscheibe
- 1.2: Keilscheibe
- 2: Anschlagmutter / Mutter
- 3: Gewindestange / Antriebswelle / Schneckenwelle
- 4: Endmutter
- 5: Arretierelement / Spannstift
- 6: Gehäuse
- 7: Radiale Lagerung
- 8: Axiale Lagerung
- 9: Schneckengetriebe
- 10:
- 10a: fest eingestellter Endanschlag
- 10b: verstellbarer Endanschlag
- 11: Armatur
- 12: Stellantrieb
- 13: Betätigungselement / Elektromotor
- 14: Handrad / Stellrad
- 15: Innenfläche der Keilscheibe
- 16: Keilflächen
- 17: Außenfläche der Keilscheibe
- 18: Radialrippen
- 19: Stellglied / Aktor
- 20: Abtriebswelle
- 21: Langloch

## Patentansprüche

1. Vorrichtung zur Umsetzung einer Drehbewegung in eine Axialbewegung wobei einer Gewindestange (3) vorgesehen ist, auf der eine axial zur Gewindestange (3) bewegbare Mutter (2) angeordnet ist, wobei zumindest eine Arretierkomponente (5) vorgesehen ist, die so angeordnet ist, dass sie eine Drehbewegung der Mutter (2) während der Axialbewegung längs der Gewindestange (3) verhindert, und wobei zumindest ein Endanschlag (10a, 10b) vorgesehen ist, der die Axialbewegung der Mutter (2) entlang der Gewindestange (3) begrenzt,
**dadurch gekennzeichnet,**
**dass** ein Keilscheibenpaar (1 a, 1 b) zwischen der axial bewegbaren Mutter (2) und dem Endanschlag (10a, 10b) angeordnet ist,
**dass** das Keilscheibenpaar (1a, 1b) so ausgestaltet ist, dass die Keilscheiben (1.1, 1.2) durch Pressen der Mutter (2) gegen den Endanschlag (10a, 10b) in Eingriff gebracht werden und ein Vorspannmoment erzeugen, wobei das Drehmoment zum Lösen der Mutter (2) von dem Endanschlag (10a, 10b) im Wesentlichen um das Vorspannmoment des Keilscheibenpaars (1 a, 1 b) kleiner ist als das Drehmoment zum Anpressen der Mutter (2) gegen den Endanschlag (10a, 10b).

2. Vorrichtung nach Anspruch 1,
**dadurch gekennzeichnet,**
**dass** es sich bei der Vorrichtung um einen Stellantrieb (12) zur Betätigung einer Armatur (11) handelt, wobei zwischen einem Betätigungselement (13) und der Armatur (11) ein insbesondere als Schneckengetriebe (9) ausgestaltetes Untersetzungsgetriebe vorgesehen ist, wobei die die Gewindestange (3) bildende Antriebswelle des Schneckengetriebes (9) ein Außengewinde mit einer definierten Gewindesteigung (α) aufweist, wobei auf der Antriebswelle (3) die axial bewegbare Mutter (2) und zwei die maximale Wanderstrecke der Mutter (2) begrenzende Endanschläge (10a, 10b) angeordnet sind, und wobei zwischen der Mutter (2) und jedem der beiden Endanschläge (10a, 10b) jeweils ein Keilscheibenpaar (1 a, 1 b) angeordnet ist.

3. Vorrichtung nach Anspruch 1 oder 2,
**dadurch gekennzeichnet,**
**dass** die beiden Keilscheiben (1.1, 1.2) des Keilscheibenpaars (1a, 1b) bzw. der Keilscheibenpaare auf den einander zugewandten Innenflächen (15) Keilflächen (16) aufweisen, wobei der Steigungswinkel (β) der Keilflächen (16) und der Steigungswinkel (α) des Außengewindes der Gewindestange bzw. der Antriebswelle (3) zueinander entgegengesetzt orientiert sind.

4. Vorrichtung nach Anspruch 3,
**dadurch gekennzeichnet**,
wobei der Steigungswinkel (3) der Keilflächen (16) größer ist als der Steigungswinkel (α) des Außengewindes der Gewindestange bzw. der Antriebswelle (3).

5. Vorrichtung nach einem oder mehreren der Ansprüche 1-4,
**dadurch gekennzeichnet,**
**dass** auf den voneinander abgewandten Außenflächen (17) der Keilscheiben (1.1, 1.2) Radialrippen (18) vorgesehen sind.

6. Vorrichtung nach einem oder mehreren der Ansprüche 1-5,
**dadurch gekennzeichnet**,
wobei die Keilscheiben (1.1, 1.2) eines jeden Keilscheibenpaars (1a, 1 b) in Abhängigkeit von dem Material der Kontaktflächen des Endanschlags (10a, 10b) und der Mutter (2) aus einem Material gefertigt sind, welches sicherstellt, dass sich die Radialrippen (18) an den Außenflächen (17) der Keilscheiben (1.1, 1.2) im Falle eines Kontakts formschlüssig in die entsprechenden Kontaktflächen der Mutter (2) bzw. des Endanschlags (10a, 10b) einpressen.

7. Vorrichtung nach einem oder mehreren der vorhergehenden Ansprüche,
**dadurch gekennzeichnet,**
**dass** beim Lösen der Mutter (2) von dem entsprechenden Endanschlag (10a, 10b) die Keilflächen (16) an den Innenflächen (15) der Keilscheiben (1.1, 1.2) gegeneinander verschiebbar sind, wobei das Drehmoment beim Anpressen gegenüber dem Drehmoment beim Ablösen von Wandermutter (2) und Endanschlag (10a, 10b) im Wesentlichen um die beim Drehen resultierende Vorspannkraft des Keilscheibenpaars (1a, 1b) erhöht ist.

8. Vorrichtung nach einem oder mehreren der Ansprüche 3-7,
**dadurch gekennzeichnet,**
**dass** im Falle des Stellantriebs (12) eine Keilscheibe (1.1; 1.2) von einem der beiden Keilscheibenpaare (1 a, 1 b) an ihrer Außenfläche fest mit der entsprechenden Kontaktfläche des Endanschlags (10a, 10b) oder der Mutter (2) verbunden ist.

9. Vorrichtung nach einem oder mehreren der vorhergehenden Ansprüche,
**dadurch gekennzeichnet,**
**dass** der Endanschlag (10a) bzw. die Endanschläge (10a, 10b) entweder fest an der Gewindestange (3) bzw. der Antriebswelle fixiert sind, oder dass zumindest ein Verstellmechanismus (4, 22, 5) vorgesehen ist, der eine variable Positionierung des Endanschlags (10b) bzw. der Endanschläge ermöglicht.

10. Vorrichtung nach Anspruch 3,
**dadurch gekennzeichnet,**
**dass** es sich bei dem Betätigungselement um einen Elektromotor (13) oder um ein separat betätigbares Stellrad, insbesondere um ein separat betätigbares Handrad (14), handelt.

11. Vorrichtung nach Anspruch 3,
**dadurch gekennzeichnet,**
**dass** es sich bei der Armatur (11) um ein Stellglied, insbesondere um ein Ventil oder einen Schieber jeweils mit Spindel und Gewindebuchse, um eine Drossel, eine Klappe, einen Kugelhahn oder einen Damper handelt.

## Claims

1. Apparatus for converting a rotational movement into an axial movement, wherein a threaded rod (3) is provided, on which a nut (2) is arranged to be movable axially to the threaded rod (3), wherein at least one blocking means is provided, which is so arranged that it blocks rotational movement of the nut (2) during the axial movement along the threaded rod (3), and wherein at least one end stop (10a, 10b) is provided, which limits axial movement of the nut (2) along the threaded rod (3),
**characterized in that**
a wedge lock washer pair (1 a, 1 b) is arranged between the axially movable nut (2) and the end stop (10a, 10b), and
the wedge lock washer pair (1 a, 1 b) is so embodied that the wedge lock washers (1.1, 1.2) are brought into engagement by the pressing of the nut (2) against the end stop (10a, 10b) and produce a prestress torque, wherein torque for releasing the nut (2) from the end stop (10a, 10b) is smaller, essentially by the prestress torque of the wedge lock washer pair (1 a, 1 b), than the torque applied as the nut (2) first pressed against the end stop (10a, 10b).

2. Apparatus as claimed in claim 1,
**characterized in that**
the apparatus is an actuator for actuating a flow regulating device (11), wherein there is provided between an actuating element (13) and the flow regulating device (11) a speed reduction transmission, especially a speed reduction transmission embodied as a worm gear transmission (9), wherein the drive shaft of the worm gear transmission (9) in the form of a threaded rod (3) has an external thread with a defined thread slope (α), wherein arranged on the drive shaft (3) are the axially movable nut (2) and two end stops (10a, 10b) limiting the maximum travel of the nut (2), and wherein arranged between the nut (2) and each of the two end stops (10a, 10b) is, in each case, a wedge lock washer pair (1a, 1b).

3. Apparatus as claimed in claim 1 or 2,
**characterized in that**
the two wedge lock washer (1.1, 1.2) of the wedge lock washer pair (1 a, 1 b), respectively the wedge lock washer pairs, have wedge surfaces (16) on the mutually facing, inner surfaces (15), wherein the slope (β) of the wedge surfaces (16) and the slope (α) of the external thread of the threaded rod, i.e. the drive shaft (3), are oriented oppositely to one another.

4. Apparatus as claimed in claim 3,
**characterized in that**
the slope (β) of the wedge surfaces (16) is greater than the slope (α) of the external thread of the threaded rod, i.e. the drive shaft (3).

5. Apparatus as claimed in one or more of claims 1-4,
**characterized in that**
radial ribs (18) are provided on the outer surfaces (17) of the wedge lock washers (1.1, 1.2), wherein the outer surfaces (17) face away from one another.

6. Apparatus as claimed in one or more of claims 1-5,
**characterized in that**
the wedge lock washers (1.1, 1.2) of each wedge lock washer pair (1 a, 1 b) are manufactured, as a function of the material the contact surfaces of the end stop (10a, 10b) and the nut (2), of a material, which assures that the radial ribs (18) on the outer surfaces (17) of the wedge lock washers (1.1, 1.2) press, in the case of contact, shape-interlockedly into the corresponding contact surfaces of the nut (2) and the end stop (10a, 10b), respectively.

7. Apparatus as claimed in one or more of the preceding claims,
**characterized in that**,
in the case of releasing the nut (2) from the relevant end stop (10a, 10b), the wedge surfaces (16) on the inner surfaces (15) of the wedge lock washers (1.1, 1.2) are shiftable relative to one another, wherein the tightening torque is greater than the release torque of the traveling nut (2) from the end stop (10a, 10b) essentially by the prestress force of the wedge lock washer pair (1 a, 1 b), such as results from the tightening.

8. Apparatus as claimed in one or more of claims 3-7,
**characterized in that**,
in the case of the actuator, a wedge lock washer (1.1; 1.2) of one of the two wedge lock washer pairs (1 a, 1 b) is connected on its outer surface fixedly with the corresponding contact surface of the end stop (10a, 10b) or the nut (2).

9. Apparatus as claimed in one or more of the preceding claims,
**characterized in that**
the end stop (10a), or the end stops (10a, 10b), are either affixed to the threaded rod (3), i.e. the drive shaft, or that at least one displacement mechanism (4, 22, 5) is provided, which enables a variable positioning of the end stop (10b), or end stops.

10. Apparatus as claimed in claim 3,
**characterized in that**
the actuating element is an electric motor (13) or a separately actuatable, operating wheel, especially a separately actuatable, hand wheel (14).

11. Apparatus as claimed in claim 3,
**characterized in that**
the flow regulating device (11) is a control element, especially a valve or a gate, in each case, with spindle and threaded sleeve, a throttle, a flap, a ball valve or a damper.

## Revendications

1. Dispositif destiné à la transformation d'un mouvement de rotation en un mouvement axial, pour lequel est prévue une tige filetée (3), sur laquelle est disposé un écrou (2) déplaçable en direction axiale par rapport à la tige filetée (3), pour lequel est prévu au moins un composant d'arrêt (5), qui est disposé de telle sorte à empêcher un mouvement de rotation de l'écrou (2) pendant le mouvement axial le long de la tige filetée (3), et pour lequel est prévue au moins une butée de fin de course (10a, 10b), qui limite le mouvement axial de l'écrou (2) le long de la tige filetée (3),
**caractérisé**
**en ce qu'**est disposée une paire de rondelles coniques (1a, 1b) entre l'écrou (2) déplaçable en direction axiale et la butée de fin de course (10a, 10b),
**en ce que** la paire de rondelles coniques (1a, 1b) est conçue de telle sorte que les rondelles coniques (1.1, 1.2) sont amenées en prise par l'application de l'écrou (2) contre la butée de fin de course (10a, 10b) et génèrent un couple de précontrainte, le couple de décollement de l'écrou (2) par rapport à la butée de fin de course (10a, 10b) étant pour l'essentiel inférieur de la valeur du couple de précontrainte de la paire de rondelles coniques (1 a, 1 b) au couple d'application de l'écrou (2) contre la butée de fin de course (10a, 10b).

2. Dispositif selon la revendication 1,
**caractérisé**
**en ce que** concernant le dispositif, il s'agit d'un mécanisme (12) destiné à la commande d'un accessoire de tuyauterie (11), pour lequel un engrenage réducteur, notamment conçu en tant qu'engrenage à vis sans fin (9), est prévu entre un élément de commande (13) et l'accessoire de tuyauterie (11), pour lequel l'arbre d'entraînement de l'engrenage à vis sans fin (9), qui constitue la tige filetée (3), comporte un filetage d'un pas (α) défini, pour lequel sont disposés sur l'arbre d'entraînement (3) l'écrou (2) déplaçable en direction axiale et deux butées de fin de course (10a, 10b) limitant la course de déplacement maximale de l'écrou (2), et pour lequel est disposée une paire de rondelles coniques (1 a, 1 b) respectivement entre l'écrou (2) et chacune des deux butées de fin de course (10a, 10b).

3. Dispositif selon la revendication 1 ou 2,
**caractérisé**
**en ce que** les deux rondelles coniques (1.1, 1.2) de la paire de rondelles coniques (1a, 1 b) ou des paires de rondelles coniques présentent des surfaces coniques sur les surfaces intérieures (15) faisant face, l'angle de pas (β) des surfaces coniques (16) et l'angle de pas (α) du filetage de la tige filetée ou de l'arbre d'entraînement (3) étant orientés en opposition.

4. Dispositif selon la revendication 3,
**caractérisé**
**en ce que** l'angle de pas (β) des surfaces coniques (16) est supérieur à l'angle de pas (α) du filetage de la tige filetée ou de l'arbre d'entraînement (3).

5. Dispositif selon l'une ou plusieurs des revendications 1 à 4,
**caractérisé**
**en ce que** des nervures radiales (18) sont prévues sur les surfaces extérieures (17) opposées des rondelles coniques (1.1, 1.2).

6. Dispositif selon l'une ou plusieurs des revendications 1 à 5,
**caractérisé**
**en ce que** les rondelles coniques (1.1, 1.2) de chaque paire de rondelles coniques (1a, 1 b) sont fabriquées, en fonction du matériau des surfaces de contact de la butée de fin de course (10a, 10b) et de l'écrou (2), en un matériau garantissant que les nervures radiales (18) sur les surfaces extérieures (17) des rondelles coniques (1.1, 1.2) s'engagent de façon adéquate, en cas de contact, dans les surfaces de contact correspondantes de l'écrou (2) ou de la butée de fin de course (10a, 10b).

7. Dispositif selon l'une ou plusieurs des revendications précédentes,
**caractérisé**
**en ce que** lors du décollement de l'écrou (2) par rapport à la butée de fin de course (10a, 10b) correspondante, les surfaces coniques (16) sur les surfaces intérieures (15) des rondelles coniques (1.1, 1.2) peuvent coulisser l'une par rapport à l'autre, le couple de rotation lors de l'application étant augmenté par rapport au couple de rotation lors du décollement de l'écrou baladeur (2) et de la butée de fin de course (10a, 10b) pour l'essentiel de la force de précontrainte de la paire de rondelles coniques (1 a, 1 b) engendrée lors de la rotation.

8. Dispositif selon l'une ou plusieurs des revendications 3 à 7,
**caractérisé**
**en ce que** dans le cas du mécanisme de commande (12), une rondelle conique (1.1, 1.2) parmi l'une des deux paires de rondelles coniques (1 a, 1 b) est relié de façon fixe sur sa surface extérieure avec la surface de contact correspondante de la butée de fin de course (10a, 10b) ou de l'écrou (2).

9. Dispositif selon l'une ou plusieurs des revendications précédentes,
**caractérisé**
**en ce que** la butée de fin de course (10a) ou les butées de fin de course (10a, 10b) sont fixées à demeure sur la tige filetée (3) ou l'arbre d'entraînement, ou en ce qu'est prévu au moins un mécanisme de réglage (4, 22, 5) permettant un positionnement variable de la butée de fin de course (10b) ou des butées de fin de course.

10. Dispositif selon la revendication 3,
**caractérisé**
**en ce que** concernant l'élément de commande, il s'agit d'un moteur électrique (13) ou d'une roue de réglage à commande séparée, notamment d'un volant (14) à commande séparée.

11. Dispositif selon la revendication 3,
**caractérisé**
**en ce que** concernant l'accessoire de tuyauterie (11), il s'agit d'un organe de réglage, notamment d'une vanne ou d'un robinet à tige et douille taraudée, d'un élément d'étranglement, d'un robinet à papillon, d'un robinet à boisseau sphérique ou d'un clapet.
